(19) Europäisches Patentamt
European Patent Office
Office européen des brevets

(11) Veröffentlichungsnummer: **0 031 792**
**B1**

(12) **EUROPÄISCHE PATENTSCHRIFT**

(45) Veröffentlichungstag der Patentschrift: **31.07.85**

(51) Int. Cl.⁴: **C 08 K 5/00**, C 08 L 67/00

(21) Anmeldenummer: **80810362.6**

(22) Anmeldetag: **24.11.80**

(54) **Polyesterformmassen verminderter Korrosionswirkung gegenüber Metallen und deren Verwendung.**

(30) Priorität: **28.11.79 CH 10579/79**

(43) Veröffentlichungstag der Anmeldung: **08.07.81 Patentblatt 81/27**

(45) Bekanntmachung des Hinweises auf die Patenterteilung: **31.07.85 Patentblatt 85/31**

(84) Benannte Vertragsstaaten: **AT CH DE FR GB IT LI NL SE**

(56) Entgegenhaltungen:
**NL - C - 74 463**
**US - A - 3 704 806**
**US - A - 3 764 579**
**US - A - 4 175 071**

**CHEMICAL ABSTRACTS, Band 89, Nr. 6, 07. August 1978 Zusammenfassung 44679v, Seite 33 COLUMBUS, OHIO (US)**

(73) Patentinhaber: **CIBA-GEIGY AG, Postfach, CH-4002 Basel (CH)**

(72) Erfinder: **Buxbaum, Lothar, Dr., Haus Litzelröder, D-6145 Lindenfels/Odenwald (DE)**
Erfinder: **Breitenfellner, Franz, Dr., Im Entich 9a, D-6140 Bensheim 1 (DE)**

**EP 0 031 792 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft eine flammwidrig ausgerüstete Polyesterformmasse, die eine verminderte Korrosionswirkung auf Metalle und Metallegierungen aufweist sowie deren Verwendung zur Herstellung von Formteilen für die Elektroindustrie.

Duroplastische und thermoplastische Kunststoffe haben als Formmassen zur Herstellung von technischen Formteilen große Bedeutung erlangt. Für viele Anwendungszwecke, so z. B. bei Formteilen für die Elektroindustrie, ist es notwendig, die Brennbarkeit herabzusetzen.

Hierzu werden im allgemeinen den Kunststoffen halogenhaltige organische Verbindungen einverleibt, gegebenenfalls zusammen mit synergistisch wirkenden Verbindungen von Elementen der fünften Hauptgruppe des Periodensystems. Unter den halogenhaltigen Verbindungen werden besonders die organischen Chlor- und Bromverbindungen verwendet.

Formteile sind häufig so gestaltet, daß der Kunststoff mit Metallteilen in direkten oder indirekten Kontakt gelangt, z. B. durch Eingießen oder Umhüllen von Metallteilen. Hierdurch kann das Korrosionsverhalten der Kunststoffe auf Metalle große Bedeutung erlangen. Flammwidrig ausgerüstete Kunststoffe wirken oft korrosionsfördernd, auch auf Metallteile in der Umgebung, wodurch der Anwendungsbereich eingeschränkt wird oder auch frühzeitige Funktionsstörungen solcher Formteile oder Metallteile eintreten können. Beispiele für solche Metallteile sind z. B. elektrische Kontakte aus Messing, versilbertes Messing, Neusilber oder Zinnbronze (Kontaktmetalle).

Aufgabe der vorliegenden Erfindung ist es, flammwidrig ausgerüstete Polyesterformmassen bereitzustellen, die eine verminderte Korrosionswirkung auf Kontaktmetalle aufweisen.

Gegenstand der vorliegenden Erfindung ist eine mit für Polyester üblichen, organischen chlor- oder bromhaltigen Verbindungen flammwidrig ausgerüstete thermoplastische Polyesterformmasse auf der Basis aliphatischer, cycloaliphatischer und/oder aromatischer Dicarbonsäuren und aliphatischer, cycloaliphatischer und/oder aromatischer Diole, dadurch gekennzeichnet, daß sie 0,1 bis 10 Gew.-%, bezogen auf die Formmasse, einer oder mehrerer Aerosole aus der Gruppe der hochdispersen Silikate, hochdispersem Aluminiumoxid und hochdispersem Titandioxid und mindestens 0,1 Gew.-%, bezogen auf die Formmasse, einer zwei- oder dreibasischen Sauerstoffsäure des Phosphors oder deren Ester der Formel

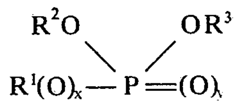

enthalten, worin x und y 0 oder 1 und x+y 1 oder 2 bedeuten und $R^1$, $R^2$ und $R^3$ unabhängig voneinander je ein Wasserstoffatom, ein Alkyl, Cycloalkyl, Aryl, Aralkyl, Alkaryl oder Alkaralkyl mit bis zu 20 C-Atomen bedeuten.

Das Aerosol (a) und die Sauerstoffsäure des Phosphors bzw. deren Ester (b) sind vorzugsweise in einer Menge von je 0,1 bis 5 Gew.-%, besonders 0,5 bis 3 Gew.-%, dem Polyester einverleibt. Das Mengenverhältnis von Komponente (a) zu Komponente (b) entspricht bevorzugt 90 bis 10 Gew.-% (a) zu 10 bis 90 Gew.-% (b), besonders 70 bis 30 Gew.-% (a) zu 30 bis 70 Gew.-% (b).

Von den Sauerstoffsäuren des Phosphors kommen hauptsächlich phosphorige Säure, Phosphorsäure oder Phosphonsäure in Frage. Unter die Ester der Phosphorsäuren fallen auch Partialester. Der Esterrest leitet sich von aliphatischen, cycloaliphatischen und aromatischen Alkoholen ab, die bevorzugt 1 bis 10 C-Atome enthalten. Die Ester können sich auch von Polyolen wie Diolen, Triolen oder Tetrolen ableiten, wobei sie dann cyclische oder polymere Strukturen aufweisen.

Die Kohlenwasserstoffreste $R^1$, $R^2$ und $R^3$ können 1 bis 20, vorzugsweise 1 bis 10 C-Atome enthalten und sie können die Bedeutung von Alkyl, Cycloalkyl, Aryl, Alkaryl, Aralkyl und Alkaralkyl haben.

Beispiele für Alkyl, das bevorzugt 1 bis 10, besonders 1 bis 6 C-Atome enthält, sind: Methyl, Äthyl, Propyl, i-Propyl, n-Butyl, t-Butyl, Pentyl, Hexyl, Heptyl, Octyl, 2-Äthylhexyl, Nonyl, Decyl, Dodecyl, Tetradecyl, Octadecyl und Eicosyl.

Beispiele für Aryl bzw. Alkaryl, die bevorzugt 6 bis 12 bzw. 7 bis 12 C-Atome enthalten, sind: Phenyl, Naphthyl, Methylphenyl, Dimethylphenyl, Äthylphenyl, Propylphenyl, Butyylphenyl, Hexylphenyl, t-Butylphenyl, Methyl-(t-butyl)phenyl, Nonylphenyl.

Beispiele für Aralkyl bzw. Alkaralkyl, die bevorzugt 7 bis 12 bzw. 8 bis 12 C-Atome enthalten, sind: Benzyl, β-Phenyläthyl, Phenylpropyl, Methylbenzyl, Dimethylbenzyl, Dibutylbenzyl, Methylbutylbenzyl, (Methylphenyl)äthyl, (Dimethylphenyl)äthyl, (Dibutylphenyl)äthyl.

Besonders bevorzugt sind $R^1$ bis $R^3$ Phenyl, Benzyl, Cyclohexyl oder Alkyl mit 1 bis 4 C-Atomen. Wenn $x = 1$ oder $y = 0$ oder 1 bedeuten, sind $R^1$ bis $R^3$ bevorzugt ein Kohlenwasserstoffrest. Wenn $x = 0$ und $y = 1$ ist, sind $R^2$ und $R^3$ auch bevorzugt Wasserstoffatome und $R^1$ ein Kohlenwasserstoffrest. Besonders wertvolle Zusätze sind Triphenylphosphat und Benzolphosphonsäure.

Silikataerosole sind bekannte und käufliche Produkte. Es handelt sich um feinteilige Stoffe mit einem mittleren Teilchendurchmesser von etwa 1 bis 200, vorzugsweise 5 bis 100 und besonders 5 bis 50 μm, die im allgemeinen eine hohe innere Oberfläche aufweisen. Diese kann mindestens 50 oder 100 oder mehr als 200 $m^2/g$ betragen. Eine andere Bezeichnung ist auch hochdisperse Silikate.

Unter den Silikataerosolen sind z. B. solche aus Alkali- und Erdalkalisilikaten wie Natrium- oder Calciumsilikat zu nennen und andere wie Aluminiumsilikat und andere Metallsilikate. Auch Silikate mit mehr als einem Metallkation wie Natrium/Calciumsilikate oder Natrium/Aluminiumsilikate sind verwendbar sowie Silikate, in deren Kristallgitter Silicium teilweise durch Aluminium ersetzt ist.

Eine bevorzugte Gruppe sind die natürlichen und synthetischen Zeolithe.

Hochdisperse Metalloxide wie Aluminiumoxid und Titandioxid sind nach dem Aerosil-Verfahren zugänglich und ebenfalls käuflich.

Flammschutzmittel auf der Basis von organischen chlor- und/oder besonders bromhaltigen Verbindungen sind ebenfalls bekannt. Es kann sich hierbei um solche handeln, die dem Kunststoff als Mischkomponente einverleibt sind, oder um solche, die als reaktive Monomere in die Polymermoleküle eingebaut sind. Beispiele für letztere sind Chlorstyrol, Tribromstyrol, Tetrachlorphthalsäureanhydrid, Dichlortetraphthalsäure oder deren Niederalkylester, Tetrabromphthalsäureanhydrid, Tetrabrombisphenol-A,N,N'-Bis($\beta$-hydroxyäthyl)tetrachlor- oder tetrabrombenzimidazolon.

Weitere Beispiele für chlor- und/oder bromhaltige Verbindungen sind z. B.:
Polytribromstyrol, Polypentabromstyrol, Decabromdiphenyl, Tetrabromdiphenyl, Hexabromdiphenyläther, Oktabromdiphenyläther, Decabromdiphenyläther, Tetrabromdiphenylsulfid, Hexabromdiphenylsulfon, 3-(2',4',6'-Tribromphenoxy)-1,2-propandiol, Di- oder Tetrabromphthalsäure bzw. deren Anhydride, Dibromterephthalsäure, hydroxyäthyliertes Di- oder Tetrabrombisphenol-A, Tetrabrom-1,4-(dihydroxymethyl)-benzol, Tetrabrombenzimidazolon, N,N'-Alkylen-bis-tetrabromphthalimid sowie die chloranalogen Verbindungen.

Weitere organische Halogenverbindungen sind z. B. in der deutschen Offenlegungsschrift 2 242 450 beschrieben.

Die organischen Chlor- und Bromverbindungen werden oft zusammen mit synergistisch wirkenden Verbindungen der fünften Hauptgruppe des Periodensystems verwendet. Unter diesen sind besonders die Phosphor- und Antimonverbindungen zu nennen, z. B. Phosphate oder besonders Antimontrioxid.

Als technisch wichtige Gruppe von Polyestern werden besonders jene angesehen, die mindestens 25 Mol-%, vorzugsweise mindestens 40 Mol-%, Terephthalsäurereste und mindestens 25 Mol-%, vorzugsweise mindestens 40 Mol-%, Alkylendiolreste enthalten, bezogen auf den Polyester. Die linearen oder verzweigten Alkylendiolreste können 2 bis 12, vorzugsweise 2 bis 6 C-Atome enthalten und sind besonders Äthylen- oder 1,4-Butylenglykolreste. Weitere für die Polyesterherstellung bekannte Monomere sowie Polyester sind z. B. in der deutschen Offenlegungsschrift 2 751 969 beschrieben. Bromhaltige Monomere, die in die Polyestermoleküle einkondensiert werden, wurden z. B. vorher beschrieben. Es kann sich hierbei um bromierte Dicarbonsäuren oder Diole handeln.

Die Einarbeitung der Zusätze kann beispielsweise durch Einmischen der Einzelzusätze gemeinsam oder einzeln und gegebenenfalls weitere Additive nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels erfolgen. Die Zusätze, z. B. bis zu 3 Gew.-%, können auch vor oder während der Polymerisation zugegeben werden. Höhere Mengen werden vorteilhaft durch Umgranulieren in einem Extruder eingearbeitet.

Als Beispiele weiterer Additive und inerter Zusätze, mit denen zusammen das Flammschutzmittel eingesetzt werden kann, sind Antioxidantien, UV-Stabilisatoren oder andere Lichtschutzmittel, Weichmacher, Fließmittel, Entformungshilfsmittel, Kristallkeimbildungsmittel, optische Aufheller, Mattierungsmittel, Farbstoffe und Pigmente, inerte oder verstärkende Füllstoffe wie Ruß, Talk, Kaolin, Metallpulver, Wollastonit, Glaskugeln oder -pulver, Quarzmehl, Asbest- und Glasfasern, Dispergierhilfsmittel.

Die erfindungsgemäßen Formmassen stellen wertvolle Engineering Plastics zur Herstellung von flammwidrigen Formteilen aller Art dar. Ihre Korrosionswirkung auf Kontaktmetalle ist vermindert. So ist es möglich, den Anwendungsbereich korrosiver flammwidriger Formmassen zu erweitern und bei solchen mit geringerer Korrosivität Qualitätsschwankungen auszugleichen.

Die nachfolgenden Beispiele erläutern die Erfindung näher.

Beispiele 1—5 und Vergleichsbeispiele A—C:

In einem mit Rührer, Stickstoffeinlaß, Trennkolonne und Temperaturmessung versehenen 10-l-Reaktor werden 3380 g Dimethylterephthalat (DMT), 3600 g Butandiol-1,4; 753 g 1,3-Bis(hydroxyethyl)-4,5,6,7-tetrabrombenzimidazolon (7 Mol-% bezogen auf DMT) und 2,3 g Tetraisopropyltitanat eingefüllt und das Gemisch auf 140° C erhitzt. Unter Rühren und Stickstoffeinleiten werden innerhalb von 3 Stunden 95% der theoretisch zu erwartenden Menge an Methanol abdestilliert, wobei die Temperatur des Reaktionsgemisches auf 215° C ansteigt.

Das so erhaltene Umesterungsprodukt wird in einen zweiten Reaktor umgefüllt und 447 g $Sb_2O_3$ (8 Gew.-%), 55,9 g der Phosphorverbindung (1 Gew.-%) und 55,9 g eines Aerosols (1 Gew.-%) aufgeschlämmt in Butandiol-1,4 zugefügt. Nach Erhitzen des Reaktionsgemisches auf 230° C wird innerhalb einer halben Stunde mit einer Wasserstrahlpumpe ein Vakuum von 53,2 mbar (40 Torr) angelegt. Unter Erhöhung der Reaktionstemperatur auf 250° C wird das Vakuum mit einer Vakuumpumpe innerhalb von 45 Minuten auf 0,66 mbar (0,50 Torr) erhöht.

Reaktionstemperatur und Vakuum werden während 2 Stunden bei diesen Reaktionsbedingungen gehalten und dann der Reaktor entleert. Der erhaltene Polyester mit einer relativen Viskosität von 1,90 wird granuliert.

Analog zu diesem Verfahren werden weitere bromhaltige Polyester mit den in nachfolgender Tabelle angegebenen Zusätzen synthetisiert. Ihre Eigenschaften und die nachfolgenden Testergebnisse sind dort ebenfalls angegeben.

Von allen Polyestern wurden Normkleinstäbe (NKS) gespritzt. 20 Normkleinstäbe werden zusammen mit 4 Metallplättchen (versilbertes Messing, Neusilber, Messing und Zinnbronze) in ein verschließbares 1-l-Gefäß gehängt (Abstand NKS zu Metallplättchen 6 cm). Die ganze Anordnung wird fünf Tage lang bei 200° C gehalten. Danach werden die Metallplättchen hinsichtlich Korrosion begutachtet. Das Aussehen der Plättchen wird mit den Zahlen 1 bis 9 benotet. Dabei ist Note 1 die bestmögliche und 9 die schlechteste Beurteilung.

Tabelle

| Beispiel Nr. | Aerosol (1 Gew.-%) | Phosphorsäure bzw. -ester (1 Gew.-%) | rel. (Polyester) | Korrosionswirkung versilb. Messing | Messing | Neusilber | Zinnbronze |
|---|---|---|---|---|---|---|---|
| A | – | – | 1,91 | 3 | 3 | 6 | 8 |
| B | – | Benzolphosphonsäure | 1,89 | 3 | 3 | 8 | 8 |
| C | – | Triphenylphosphat | 1,97 | 2 | 3 | 3 | 9 |
| 1 | Al-Silikat[1]) | – | 2,03 | 2 | 3 | 3 | 5 |
| 2 | $Al_2O_3$[2]) | – | 1,92 | 2 | 3 | 3 | 4 |
| 3 | $TiO_2$[3]) | – | 1,95 | 2 | 3 | 4 | 5 |
| 4 | Al-Silikat[1]) | Triphenylphosphat | 1,92 | 1 | 2 | 3 | 4 |
| 5 | $Al_2O_3$[2]) | Benzolphosphonsäure | 2,15 | 1 | 2 | 3 | 3 |

[1]) Handelsprodukt P820 von Degussa.
[2]) Handelsprodukt $Al_2O_3$-C von Degussa.
[3]) Handelsprodukt $TiO_2$-P25 von Degussa.

**Patentansprüche**

1. Mit für Polyester üblichen, organischen chlor- oder bromhaltigen Verbindungen flammwidrig ausgerüstete thermoplastische Polyesterformmasse auf der Basis aliphatischer, cycloaliphatischer und/oder aromatischer Dicarbonsäuren und aliphatischer, cycloaliphatischer und/oder aromatischer Diole, dadurch gekennzeichnet, daß sie 0,1 bis 10 Gew.-%, bezogen auf die Formmasse, einer oder mehrerer Aerosole aus der Gruppe der hochdispersen Silikate, hochdispersem Aluminiumoxid und hochdispersem Titandioxid und mindestens 0,1 Gew.-%, bezogen auf die Formmasse, einer zwei- oder dreibasischen Sauerstoffsäure des Phosphors oder deren Ester der Formel

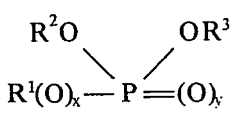

enthalten, worin x und y 0 oder 1 und x+y 1 oder 2 bedeuten und $R^1$, $R^2$ und $R^3$ unabhängig voneinander je ein Wasserstoffatom, ein Alkyl, Cycloalkyl, Aryl, Aralkyl, Alkaryl oder Alkaralkyl mit bis zu 20 C-Atomen bedeuten.

2. Formmasse gemäß Anspruch 1, dadurch gekennzeichnet, daß sie 0,5 bis 3 Gew.-% des Aerosols enthält.

3. Formmasse gemäß Anspruch 1, dadurch gekennzeichnet, daß sie 0,1 bis 5 Gew.-% Sauerstoffsäure des Phosphors oder deren Ester enthält.

4. Formmasse gemäß Anspruch 1, dadurch gekennzeichnet, daß das Alkyl 1 bis 10 C-Atome, das Cycloalkyl 5 bis 7 Ring-C-Atome, das Aryl 6 bis 12 C-Atome, das Aralkyl 7 bis 12 C-Atome, das Alkaryl 7 bis 12 C-Atome und das Alkaralkyl 8 bis 12 C-Atome enthält.

5. Formmasse gemäß Anspruch 1, dadurch gekennzeichnet, daß das Aerosol eine innere Oberfläche von mindestens 50 $m^2/g$ aufweist.

6. Verwendung der Formmasse gemäß Anspruch 1 zur Herstellung von Formteilen für die Elektroindustrie.

## Claims

1. A polyester moulding composition flame-proofed with conventional organic chlorine- and bromine-containing compounds, and based on aliphatic, cycloaliphatic and/or aromatic dicarboxylic acids and aliphatic, cycloaliphatic and/or aromatic diols, said moulding composition containing 0.1 to 10% by weight, based on said composition, of one or more aerosols selected from the group comprising the highly dispersed silicates, highly dispersed alumina, and highly dispersed titanium dioxide, and at least 0.1% by weight, based on said moulding composition, of a dibasic or tribasic oxyacid of phosphorus or an ester thereof, of the formula

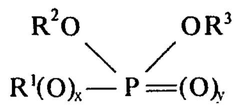

wherein each of x and y is 0 or 1 and the sum of x+y is 1 or 2, and each of $R^1$, $R^2$ and $R^3$ independently is a hydrogen atom or an alkyl, cycloalkyl, aryl, aralkyl or alkaralkyl radical, each containing up to 20 carbon atoms.

2. A moulding composition according to claim 1, which contains 0.5 to 3% by weight of aerosol.

3. A moulding composition according to claim 1, which contains 0.1 to 5% by weight of an oxyacid of phosphorus or an ester thereof.

4. A moulding composition according to claim 1, wherein the alkyl radical contains 1 to 10 carbon atoms, the cycloalkyl radical contains 5 to 7 ring carbon atoms, the aryl radical contains 6 to 12 carbon atoms, the aralkyl radical contains 7 to 12 carbon radicals, and the alkaralkyl radical contains 8 to 12 carbon atoms.

5. A moulding composition according to claim 1, wherein the aerosol has an internal surface area of at least 50 $m^2/g$.

6. Use of a moulding composition according to claim 1 for the manufacture of moulded articles for the electrical industry.

## Revendications

1. Matière à mouler de polyester, thermoplastique, traitée ininflammable par des composés organiques chlorés ou bromés courants pour les polyesters, à base d'acides dicarboxyliques aliphatiques, cycloaliphatiques et/ou aromatiques et de diols aliphatiques, cycloaliphatiques et/ou aromatiques, caractérisée en ce qu'elle contient 0,1 à 10% en poids, sur la base de la matière à mouler, d'un ou plusieurs aérosols du groupe comprenant les silicates hautement dispersés, d'oxyde d'aluminium hautement dispersé et le dioxyde de titane hautement dispersé, et au moins 0,1% en poids, sur la base de la matière à mouler, d'un di- ou trioxacide du phosphore ou l'un de ses esters de formule

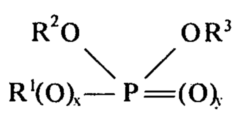

dans laquelle x et y valent 0 ou 1 et x+y vaut 1 ou 2, et $R^1$, $R^2$ et $R^3$ sont, indépendamment les uns des autres, chacun un atome d'hydrogène, un radical alkyle, cycloalkyle, aryle, aralkyle, alcaryle ou alcaralkyle ayant jusqu'à 20 atomes de carbone.

2. Matière à mouler selon la revendication 1, caractérisée en ce qu'elle contient 0,5 à 3% en poids de l'aérosol.

3. Matière à mouler selon la revendication 1, caractérisée en ce qu'elle contient 0,1 à 5% en poids d'un oxacide du phosphore ou l'un de ses esters.

4. Matière à mouler selon la revendication 1, caractérisée en ce que le radical alkyle contient 1 à 10 atomes de carbone, le radical cycloalkyle 5 à 7 atomes de carbone dans le cycle, le radical aryle 6 à 12 atomes de carbone, le radical aralkyle 7 à 12 atomes de carbone, le radical alcaryle 7 à 12 atomes de

carbone et le radical alcaralkyle 8 à 12 atomes de carbone.

5. Matière à mouler selon la revendication 1, caractérisée en ce que l'aérosol présente une aire spécifique d'au moins 50 $m^2/g$.

6. Utilisation de la matière à mouler selon la revendication 1 pour la fabrication de pièces moulées destinées à l'industrie électrique.